(19) Europäisches Patentamt
European Patent Office
Office européen des brevets

(11) **EP 3 598 343 A1**

(12) **EUROPEAN PATENT APPLICATION**

(43) Date of publication:
**22.01.2020 Bulletin 2020/04**

(51) Int Cl.:
**G06N 3/04** (2006.01)   **G06N 3/08** (2006.01)

(21) Application number: **18183849.1**

(22) Date of filing: **17.07.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Technologies Oy**
**02610 Espoo (FI)**

(72) Inventors:
• **BHATTACHARYA, Sourav**
**Cambridge Cambridgeshire CB3 0FA (GB)**
• **GIL RAMOS, Alberto**
**Cambridge Cambridgeshire CB3 0FA (GB)**

(74) Representative: **Nokia EPO representatives**
**Nokia Technologies Oy**
**Karakaari 7**
**02610 Espoo (FI)**

(54) **METHOD AND APPARATUS FOR PROCESSING AUDIO DATA**

(57)     Embodiments relate to an apparatus (2) for determining a machine learning model configured for processing sensor data, the apparatus (2) comprising means (4, 5, PI) configured for:
- training (S4) a machine learning model ($M_0$) based on a first dataset ($D_0$), thereby determining a first trained machine learning model ($M_k$), wherein the first dataset comprises a plurality of training examples, a training example specifying:
- a sensor signal, and
- a label specifying one of a plurality of classes associated with the sensor signal, encoded as a one-hot vector, wherein the machine learning model comprises a softmax layer configured for determining, for the respective classes, a probability,
- determining (S6) a second dataset ($D_k$) based on the first dataset ($D_0$) and the first trained machine learning model ($M_0$), wherein the second dataset comprises a plurality of training examples corresponding to training examples of the first dataset, a training example of the second dataset specifying:
- a sensor signal, and
- a label encoded as a probability vector, determined based on the output of the softmax layer of the first trained machine learning model for said sensor signal,

- training (S4) said machine learning model ($M_0$) based on the second dataset ($D_k$), thereby determining a second trained machine learning model ($M_k$).

FIG. 5

## Description

FIELD OF THE INVENTION

The present invention relates to the field of audio data processing. In particular, the present invention relates to a method and an apparatus for determining a machine learning model configured for processing audio data.

BACKGROUND

Deep learning-based techniques are a popular solution for processing and analyzing sensor data, such as image or audio data. Voice recognition based on deep learning techniques allows a user to interact with a device by voice commands.

It has recently been shown that deep neural network may be sensitive to adversarial attacks: The recognition accuracy of a deep neural network can be drastically reduced when a small targeted perturbation is added to the input. This result in a security vulnerability for the devices using deep learning models, such as mobile phones, wearables, IoT devices...

SUMMARY

It is thus an object of embodiments of the present invention to propose a method and an apparatus for processing sensor data, which do not show the inherent shortcomings of the prior art.

Accordingly, embodiments relate to an apparatus for determining a machine learning model configured for processing sensor data, the apparatus comprising means configured for:

- training a machine learning model based on a first dataset, thereby determining a first trained machine learning model, wherein the first dataset comprises a plurality of training examples, a training example specifying:

  - a sensor signal, and
  - a label specifying one of a plurality of classes associated with the sensor signal, encoded as a one-hot vector,

  wherein the machine learning model comprises a softmax layer configured for determining, for the respective classes, a probability,
- determining a second dataset based on the first dataset and the first trained machine learning model, wherein the second dataset comprises a plurality of training examples corresponding to training examples of the first dataset, a training example of the second dataset specifying:

  - a sensor signal, and

- a label encoded as a probability vector, determined based on the output of the softmax layer of the first trained machine learning model for said sensor signal,

- training said machine learning model based on the second dataset, thereby determining a second trained machine learning model.

Also, embodiments relate to a method for determining a machine learning model configured for processing sensor data, said method being executed by a model determination apparatus and comprising:

- training a machine learning model based on a first dataset, thereby determining a first trained machine learning model, wherein the first dataset comprises a plurality of training examples, a training example specifying:

  - a sensor signal, and
  - a label specifying one of a plurality of classes associated with the sensor signal, encoded as a one-hot vector,

  wherein the machine learning model comprises a softmax layer configured for determining, for the respective classes, a probability,
- determining a second dataset based on the first dataset and the first trained machine learning model, wherein the second dataset comprises a plurality of training examples corresponding to training examples of the first dataset, a training example of the second dataset specifying:

  - a sensor signal, and
  - a label encoded as a probability vector, determined based on the output of the softmax layer of the first trained machine learning model for said sensor signal,

- training said machine learning model based on the second dataset, thereby determining a second trained machine learning model.

In some embodiments, the sensor signal is an audio signal.

In some embodiments, said softmax layer depends on a parameter, wherein said parameter impacts the flatness of said output of the softmax layer, and wherein determining said first trained machine learning model comprises executing a search procedure for an acceptable value of said parameter.

Some embodiments comprise determining a compressed model based on the second trained machine learning model.

Some embodiments comprise:

- determining a plurality of successive second datasets and corresponding second trained machine learning models,

wherein determining a compressed model comprises:

- determining a third dataset based on said plurality of second datasets,
- training a third model based on the third dataset, wherein the third model has a lower complexity than a second trained machine learning model.

Determining a compressed model may comprise binarization of parameters.

Some embodiments comprise deploying said second trained machine learning model, or a compressed model determined based on said second trained machine learning model, in an apparatus for processing sensor signal.

Some embodiments comprise determining a class based on an input sensor signal and on the second trained machine learning model, or on a compressed model determined based on said second trained machine learning model.

In some embodiments, said means include at least one processor and at least one memory, the at least one memory storing computer program code, the at least one memory and the computer program code being configured to, with the at least one processor, cause the apparatus to at least in part perform the functions discussed above.

Embodiments also relate to a computer program comprising instructions for performing the method mentioned before when said instructions are executed by a computer. The computer program may be stored on a computer readable medium. The computer readable medium may be a non-transitory computer readable medium.

Embodiments also relate to an apparatus for processing sensor signal, obtained by the method above.

Embodiments also relate to a method for processing sensor signal, executed by an apparatus for processing sensor signal, comprising:

- receiving data representative of a second trained machine learning model, or a compressed model determined based on said second trained machine learning model, determined by the method above,
- classifying an input signal based on the received machine learning model.

The input signal may comprise a sensor signal and an adversarial signal.

The input signal may comprise an audio signal.

BRIEF DESCRIPTION OF THE DRAWINGS

The above and other objects and features of the invention will become more apparent and the invention itself will be best understood by referring to the following description of embodiments taken in conjunction with the accompanying drawings wherein:

Figure 1 is a block diagram showing the use of a machine learning model for processing audio data,
Figure 2 is a block diagram showing the use of a machine learning model for processing audio data, in the presence of an adversarial attack,
Figure 3 is a graph of audio signals involved in an adversarial attack,
Figure 4 is a block diagram of a system for processing audio data,
Figure 5 is a flowchart of a method for processing audio data, and
Figure 6 is a flowchart of a method for compressing a machine learning model.

DESCRIPTION OF EMBODIMENTS

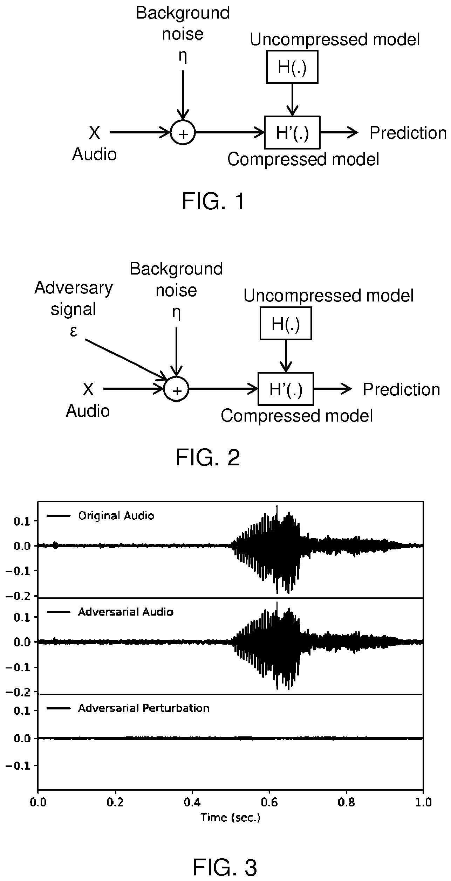

Figure 1 is a block diagram showing the use of a machine learning model for processing audio data.

A model H'(.) is a machine learning model configured for performing a prediction, for example a classification task, based on an audio signal. The model H'(.) may be determined by compressing a model H(.). Determining the model H(.) may involve model selection, training based on a training dataset, validation...

The input of the model H'(.) may result from the combination of an audio signal X and background noise $\eta$. The model H'(.) may perform classification on the audio signal X with a satisfactory accuracy, despite the background noise $\eta$.

Figure 2 is a block diagram showing the use of a machine learning model for processing audio data, in the presence of an adversarial attack.

As in the situation of Figure 1, a model H'(.) is a machine learning model configured for performing a prediction, for example a classification task, based on an audio signal. The model H'(.) may be determined by compressing a model H(.). Determining the model H(.) may involve model selection, training based on a training dataset, validation...

The input of the model H'(.) may result from the combination of an audio signal X, of background noise $\eta$, and of an adversary signal $\varepsilon$. The goal of an adversarial attack is to significantly reduce the prediction accuracy of the model H'(.) with an imperceptible adversary signal $\varepsilon$.

Figure 3 illustrates the overall idea of an adversarial attack. The top part of the figure represents an audio signal X (labelled original signal). When the deployed audio recognition model H'(.) is presented with this input, the deep neural network can correctly identify the class associated with the audio signal X. However, under adversarial setting, when an inaudible targeted perturbation, such as the bottom part in Figure 3 (labeled as adversarial perturbation), is added to the signal to generate an adversarial audio (middle part in Figure 3), this innocuous signal, which is very close to the original signal can make the classifier's prediction incorrect.

Embodiments described herein aims at improving the robustness of a machine learning model configured for processing audio data towards adversarial attacks. Some embodiments are more specifically concerned with evasion attacks, i.e. to perform a miss-classification under the white-box assumption, i.e. an attacker has knowledge about the type of architecture and parameters of the uncompressed model H(.).

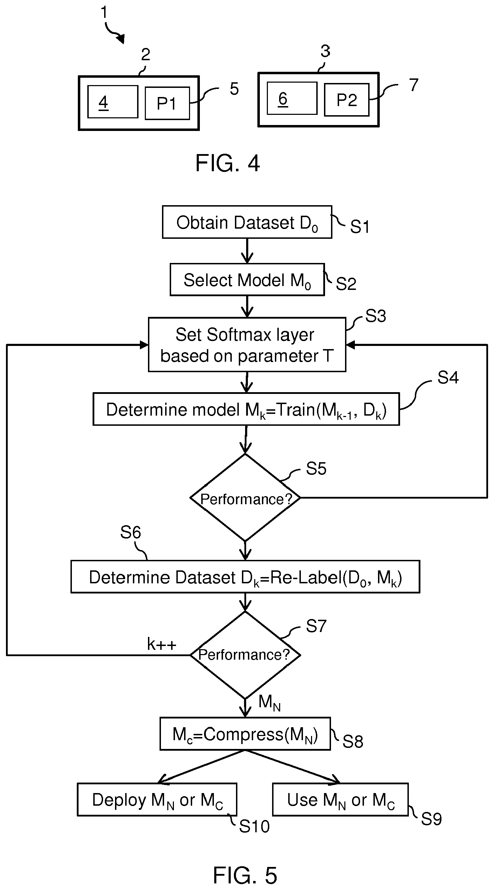

**Figure 4** is a block diagram of a system 1 for processing audio data. The system 1 comprises one or more data processing devices.

Machine learning typically involves different tasks: Model selection, model training, validation, compression, model deployment, inference. These tasks may be performed by different processing devices.

Accordingly, in the illustrated embodiment, the system 1 comprises a processing device 2 and a processing device 3. The processing device 2 determines a machine learning model configured for processing audio data. This may involve for example model selection, training and compression. Then, the machine learning model determined by the processing device 2 is deployed in the processing device 3. This may involves transferring data specifying the architecture and parameters of the machine learning model from the processing device 2 to the processing device 3, for example through a network connection. Accordingly, the processing device 3 can now process audio data with the machine learning model. This may involve prediction, inference, classification... For example, the machine learning model is configured for performing a classification task based on an audio signal. This provides for voice recognition functionalities in the processing device 3.

The processing device 2 may have higher processing resources than the processing device 3, for example in terms of memory, power availability, processor capacity... In some embodiments, the processing device 2 comprises one or more servers, for example in a cloud environment, and the processing device 3 comprises one or more embedded devices, such as a user device (Smart Phone, a wearable...) or IoT device.

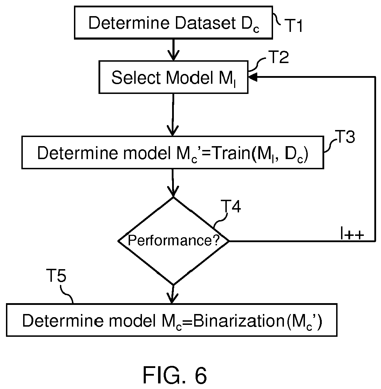

The processing device 2 comprises at least one processor 4 and at least one memory 5. The at least one memory 5 stores computer program code P1. The at least one memory 5 and the computer program code P1 are configured to, with the at least one processor 4, cause the processing device 2 to perform at least in part the method described with reference to Figures 5 and 6. The processing device 2 may comprises other elements such as a user interface, a network interface, sensors...

Similarly, the processing device 3 comprises at least one processor 6 and at least one memory 7. The at least one memory 7 stores computer program code P2. The at least one memory 7 and the computer program code P2 are configured to, with the at least one processor 6, cause the processing device 3 to perform at least in part the method described with reference to Figures 5 and 6. The processing device 3 may comprises other elements such as a user interface, a network interface, sensors...

In some embodiments, the system 1 comprises only one processing device, which performs both training and classification.

**Figure 5** is a flowchart of a method for processing audio data, executed by the processing device 2.

The processing device 2 obtains or stores data representative of a dataset $D_0$ (step S1). The dataset $D_0$ comprises a plurality of training examples. A training example specifies an audio signal and a label. The label specifies one of a plurality of classes associated with the audio signal. The dataset $D_0$ may be used for training, validation... of audio processing machine learning models. For example, the dataset $D_0$ may be split in a training part and a validation part as needed.

The audio signal may be encoded based on a known audio encoding technique, compressed or uncompressed...

The classes may correspond to words, phonemes, user identities... depending on the application. For example, in a voice recognition application, a label may specify one of a plurality of phonemes.

In the dataset $D_0$, a label is encoded by a one-hot vector. For example, for C classes, the label is encoded by a vector of size C, wherein all elements are 0 except one which is 1 and correspond to the specified class. In some embodiments, the processing device 2 obtains or stores data representative of a dataset wherein the labels are encoded in a different manner, and the processing device 2 obtains the dataset $D_0$ by converting the format of the labels to one-hot vectors.

The processing device 2 select a machine learning model $M_0$ (step S2). The model $M_0$ is for example selected from a plurality of audio processing models. The audio processing models are for example neural networks having different architectures. The selection task may involve for example training and validation of the available models based on the dataset $D_0$. The parameters of the model $M_0$ may have a predefined value, or may be randomly initialized.

The model $M_0$ may include various neural network layers, e.g. fully connected, convolutional, pooling layers... The model $M_0$ includes a softmax layer. The softmax layer determines probabilities associated with the C classes, based on features determined by previous layers. Typically, the class with the highest probability is selected as the output of the classification task. The output of the softmax layer is for example a vector of size C, with elements comprised in the [0, 1] interval, the sum of which is equal to 1. For example, for a vector x of size C, the softmax probabilities are determined based on:

$$(softmax(x))_i = \frac{e^{x_i}}{\sum_i e^{x_j}}$$

As described in more details hereafter, the processing device 2 trains the model $M_0$, re-labels the dataset $D_0$ and re-trains the model $M_0$. Since this may be iterated, we introduce the index k for the model $M_k$ and the dataset $D_k$.

Once the architecture of the model $M_0$ is selected, for example that has a low bias on the dataset $D_0$, the processing device 2 introduces a parameter in the softmax layer. We call it the temperature parameter T. More specifically, the processing device 2 configures (step S3) the softmax layer to determine probabilities based on:

$$(softmax(x))_i = \frac{e^{x_i/T}}{\sum_i e^{x_j/T}}$$

wherein the value of T follows a determined search strategy. Interestingly, the higher the value of the temperature parameter T, the flatter the probability distribution becomes. In other words, T impacts the flatness of the output of the softmax layer. The flatness can be defined, in this context, as the peak to average or peak to valley ratio, for example. When T is very large the neural network may become difficult to train.

The processing device 2 determines a trained machine learning model $M_k$ (step S4) by training the model $M_{k-1}$ (which includes the modified softmax layer of step S3), based on the dataset $D_{k-1}$ (initially, this is the dataset $D_0$ with one-hot encoded labels). Training relies for example on stochastic gradient descent (SGD).

Then, the processing device 2 evaluates the performances of the trained machine learning model $M_k$ (step S5). Various test can be used to evaluate the performances. For example, in an embodiment, the processing device 2 determines the accuracy of the model $M_k$ based on a training part and a validation part of the dataset $D_{k-1}$, respectively. The processing device 2 determines the accuracy drop, that is the difference between both accuracies, and compares it with a predetermined threshold, for example 1%.

If the performances are not satisfactory, for example if the accuracy drop is above the determined threshold, steps S3 to S5 may be repeated with an updated value of the temperature parameter T. The updated value of the temperature parameter T is selected for example by a binary search procedure, initialized at a large value, e.g., T = 100.

If the performances are satisfactory, the processing device 2 determines a dataset $D_k$ based on the trained model $M_k$ and on the dataset $D_0$ (Step S6). More specifically, the training examples of the dataset $D_0$ are re-labelled: For a given training example, the processing device 2 determines the output of the softmax layer of the model $M_k$ based on the audio signal. The resulting vector of probabilities is used as label in the dataset $D_k$. Accordingly, a label in the dataset $D_k$ (for k >= 1) may be referred to as a "soft label" because, as opposed to a one-hot encoded vector, it specifies a probability distribution associated with the corresponding audio signal.

Note that in practice, determining the dataset $D_k$ does not require duplicate storing of the audio signals of the dataset $D_0$. For example, if the audio signals and labels of $D_0$ are store respectively in two columns of a table, additional columns for storing the labels of $D_k$ may be added to the table for k = 1, 2, ...

Once the relabeling of the dataset is done at step S6, the processing device 2 evaluates the performances of the model $M_k$ (Step S7). As for step S5, various test may be used. In an embodiment, similarly to step 5, the processing device 2 determines the accuracy drop when tested on the validation dataset. A significant drop is determined with a pre-defined accuracy threshold $Acc_{Th}$, e.g., 1% relative drop in the accuracy. The processing device 2 repeats steps S3 to S7, for increasing index k, until the generated model $M_k$ performs well (based on the test of step S7). Accordingly, a plurality of models $M_k$ and a plurality of datasets $D_k$ have been generated. We denote $M_N$ the last generated model. For k > 1, the model $M_k$ is trained based on a dataset $D_{k-1}$ which comprises soft labels.

In some embodiment, the processing device 2 determines a compressed model $M_c$ based at least on the model $M_N$ (step S8). Various compression technique may be applied, and some example are given hereafter with reference to Figure 6. The model $M_c$ requires less processing resources for the classification task than the model $M_N$, and can therefore be used by less powerful processing devices.

It has been found that the models $M_N$ and $M_c$ can be used for classification of audio signals, and are robust to adversarial attacks. The model $M_N$ or $M_c$ may be used either by the processing device 2 itself and/or after being deployed in another processing device 3.

Accordingly, in some embodiments, the processing device 2 determines the label associated with an audio signal, by using the model $M_N$ or $M_c$ (step S9). Also, in some embodiments, the processing device 2 deploys the model $M_N$ or $M_c$ in another processing device 3 (step S10). This may involve transferring data representative of architecture and parameters the model $M_N$ or $M_c$ from the processing device 2 to processing device 3. The transfer may use intermediate nodes, such as a model repository or an app store. For example, the model $M_N$ or $M_c$ is embedded in an application which is stored by the processing device 2 on an app store. Then the processing device 3 install the app from the app store.

**Figure 6** is a flowchart of a method for determining a compressed model $M_c$ based at least on the model $M_N$. This is an example implementation of step S7. In this example, the model is compressed through knowledge distillation and binarization. More generally, the model may be compressed through knowledge distillation and/or binarization, and/or other compression techniques. The purpose of compression is to reduce the overall size of the model, e.g. for embedded deployment. Moreover, it has been found that the compressed model is also more robust against an adversarial attack, such as an evasion attack.

In the soft-label training procedure (steps S1 to S6), a number of models $M_k$ is trained. The processing device 2 builds a committee of neural network models $M_k$ by keeping all the models generated.

Next, the processing device 2 combines the predictions of the models $M_k$ to produce the soft-labels of a dataset $D_c$ (step T1). For example, the soft-label of the dataset $D_c$ are determined by averaging the soft-labels of the datasets $D_k$ for k = 1 to N.

The processing device 2 selects a model $M_l$, which has a smaller size than the model $M_N$ (Step T2). The main purpose of the selection is to reduce the overall number of parameters in the model $M_l$. For example, in a deep neural network architecture, the model $M_l$ has less layers, less neurons and/or less connections than the model $M_N$. The size and computational load of the model $M_l$ is determined based on the memory size and computational capacity of the target deployment hardware platform.

The processing device 2 determines a trained machine learning model $M_c$' by training the model $M_l$ based on the dataset $D_c$ (step T3).

The processing device 2 evaluates the performances of the trained machine learning model $M_c$' (step T4). As in steps S5 or S7, this can involves determining an accuracy drop with a validation dataset. Steps T2 to T4 are repeated with various level of compression at step T2, until acceptable performances are obtained.

Next, the processing device 2 determines the model Mc by binarization of the model $M_c$' (step T5). This may also involve a loop with various levels of binarization until acceptable performances are obtained.

Based on the trained machine learning model $M_N$ or $M_c$, the processing device 2 or the processing device 3 is capable of classifying audio signals with good performances, even in the case of an adversarial attack. Indeed, it has been found that re-training the model based on soft labels, as described with reference to steps S4 and S6, contributes to make the trained model more robust against adversarial attacks. Moreover, it has been found that setting a softmax layer wherein the probability distribution can be controlled to more or less flat based on a parameter, as described with reference to step S3, also contributes to make the trained model more robust against adversarial attacks. Compression (step S8) also contributes to make the trained model more robust against adversarial attacks.

Embodiments have been described for processing of audio signals. Other embodiments could relate to other types of sensor data. For example, a sensor signal can be an image. The adversarial attack consists in modifying the value of some pixels. Other examples include accelerometers, gyroscope, pressure sensor...

It should be noted that although examples of methods have been described with a specific order of steps, this does not exclude other implementations. In particular, the described steps may be executed in another order, partially or totally in parallel...

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represent various processes which may be substantially represented in computer readable medium and so executed by a computer or processor, whether or not such computer or processor is explicitly shown.

While the principles of the invention have been described above in connection with specific embodiments, it is to be clearly understood that this description is made only by way of example and not as a limitation on the scope of the invention, as defined in the appended claims.

**Claims**

1.  Apparatus (2) for determining a machine learning model configured for processing sensor data, the apparatus (2) comprising means (4, 5, P1) configured for:

- training (S4) a machine learning model ($M_0$) based on a first dataset ($D_0$), thereby determining a first trained machine learning model ($M_k$), wherein the first dataset comprises a plurality of training examples, a training example specifying:

- a sensor signal, and
- a label specifying one of a plurality of classes associated with the sensor signal, encoded as a one-hot vector,

wherein the machine learning model comprises a softmax layer configured for determining, for the respective classes, a probability,
- determining (S6) a second dataset ($D_k$) based on the first dataset ($D_0$) and the first trained machine learning model ($M_0$), wherein the second dataset comprises a plurality of training examples corresponding to training examples of the first dataset, a training example of the second dataset specifying:

- a sensor signal, and
- a label encoded as a probability vector, determined based on the output of the softmax layer of the first trained machine learning model for said sensor signal,

- training (S4) said machine learning model ($M_0$) based on the second dataset ($D_k$), thereby determining a second trained machine learning model ($M_k$).

2. Apparatus according to claim 1, wherein said sensor signal is an audio signal.

3. Apparatus according to any one of claims 1 and 2, wherein said softmax layer depends on a parameter (T), wherein said parameter impacts the flatness of said output of the softmax layer, and wherein determining said first trained machine learning model comprises executing a search procedure (S3, S4, S5) for an acceptable value of said parameter.

4. Apparatus according to any one of claims 1 to 3, wherein said means are further configured for determining (S8) a compressed model ($M_c$) based on the second trained machine learning model.

5. Apparatus according to claims 4, wherein said means are further configured for:

- determining a plurality of successive second datasets ($D_k$) and corresponding second trained machine learning models ($M_k$),

wherein determining a compressed model comprises:

- determining (T1) a third dataset ($D_c$) based on said plurality of second datasets ($D_k$),
- training (T3) a third model ($M_l$) based on the third dataset, wherein the third model has a lower complexity than a second trained machine learning model.

6. Apparatus according to any one of claims 4 and 5, wherein determining a compressed model comprises binarization (T5) of parameters.

7. Apparatus according to any one of claims 1 to 6, wherein said means are further configured for deploying (S10) said second trained machine learning model, or a compressed model determined based on said second trained machine learning model, in an apparatus (3) for processing sensor signal.

8. Apparatus according to any one of claims 1 to 7, wherein said means are further configured for determining (S9) a class based on an input sensor signal and on the second trained machine learning model, or on a compressed model determined based on said second trained machine learning model.

9. A method for determining a machine learning model configured for processing sensor data, said method being executed by a model determination apparatus (2) and comprising:

- training (S4) a machine learning model based on a first dataset, thereby determining a first trained machine learning model, wherein the first dataset comprises a plurality of training examples, a training example specifying:

- a sensor signal, and
- a label specifying one of a plurality of classes associated with the sensor signal, encoded as a one-hot vector,

wherein the machine learning model comprises a softmax layer configured for determining, for the respective classes, a probability,
- determining (S6) a second dataset based on the first dataset and the first trained machine learning model, wherein the second dataset comprises a plurality of training examples corresponding to training examples of the first dataset, a training example of the second dataset specifying:

- a sensor signal, and
- a label encoded as a probability vector, determined based on the output of the softmax layer of the first trained machine learning model for said sensor signal,

- training said machine learning model based on the second dataset, thereby determining a second trained machine learning model.

10. Method according to claim 9, comprising deploying (S10) said second trained machine learning model, or a compressed model determined based on said second trained machine learning model, in an apparatus (3) for processing sensor signal.

11. Computer program (P) comprising instructions for performing the method of any one of claims 9 and 10 when said instructions are executed by a computer.

12. Apparatus (3) for processing sensor signal, obtained by the method of claim 10.

13. Method for processing sensor signal, executed by an apparatus (3) for processing sensor signal, comprising:

- receiving data representative of a second trained machine learning model, or a compressed model determined based on said second trained machine learning model, determined by the method of claim 9 or 10,
- classifying an input signal based on the received machine learning model.

14. Method according to claim 13, wherein said input signal comprises a sensor signal and an adversarial signal.

15. Method according to any one of claims 13 and 14, wherein said input signal comprises an audio signal.

Background
noise
η

Uncompressed model
H(.)

X —— Audio → (+) → H'(.) → Prediction

Compressed model

FIG. 1

Adversary
signal
ε

Background
noise
η

Uncompressed model
H(.)

X —— Audio → (+) → H'(.) → Prediction

Compressed model

FIG. 2

FIG. 3

FIG. 4

FIG. 5

Determine Dataset $D_c$ — T1

Select Model $M_l$ — T2

Determine model $M_c$'=Train($M_l$, $D_c$) — T3

Performance? — T4

I++

T5
Determine model $M_c$=Binarization($M_c$')

FIG. 6

Europäisches
Patentamt

European
Patent Office

Office européen
des brevets

**EUROPEAN SEARCH REPORT**

Application Number

EP 18 18 3849

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PAPERNOT NICOLAS ET AL: "Distillation as a Defense to Adversarial Perturbations Against Deep Neural Networks", 2016 IEEE SYMPOSIUM ON SECURITY AND PRIVACY (SP), IEEE, 22 May 2016 (2016-05-22), pages 582-597, XP032945721, DOI: 10.1109/SP.2016.41 [retrieved on 2016-08-16] * abstract, sections I, II-C, III, and V * | 1-15 | INV. G06N3/04 G06N3/08 |
| A | US 2017/286830 A1 (EL-YANIV RAN [IL] ET AL) 5 October 2017 (2017-10-05) * [0004],[0038],[0047]-[0052],[0064],[0112] * | 2,4,6-8, 10,15 | |
| A | SARAH TAN ET AL: "Transparent Model Distillation", ARXIV.ORG, CORNELL UNIVERSITY LIBRARY, 201 OLIN LIBRARY CORNELL UNIVERSITY ITHACA, NY 14853, 26 January 2018 (2018-01-26), XP080854818, * Section 2 * | 1-15 | |

TECHNICAL FIELDS
SEARCHED     (IPC)

G06N

The present search report has been drawn up for all claims

| Place of search | Date of completion of the search | Examiner |
|---|---|---|
| The Hague | 15 January 2019 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 18 18 3849

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2019

| Patent document cited in search report | Publication date | Patent family member(s) | Publication date |
|---|---|---|---|
| US 2017286830 A1 | 05-10-2017 | NONE | |

For more details about this annex : see Official Journal of the European Patent Office, No. 12/82

EPO FORM P0459